# FASCICULE DE BREVET EUROPEEN

(11) **EP 2 204 034 B1**
(45) Date de publication et mention de la délivrance du brevet: **03.04.2019**
(21) Numéro de dépôt: 08841890.0
(22) Date de dépôt: 21.10.2008
(51) Int. Cl.: H04L 29/06, H04L 12/22

(54) **PASSERELLE BIDIRECTIONNELLE À NIVEAU DE SÉCURITÉ RENFORCÉ**
BIDIREKTIONALER GATEWAY MIT ERHÖHTER SICHERHEIT
BIDIRECTIONAL GATEWAY WITH ENHANCED SECURITY LEVEL

(30) Priorité: 23.10.2007 FR 0707428
(43) Date de publication de la demande: 07.07.2010
(73) Titulaire: Safran Electronics & Defense, 92100 Boulogne-Billancourt (FR)
(72) Inventeur: DECLETY, Benjamin, F-75015 Paris (FR); HAURY, Christian, F-75015 Paris (FR)
(74) Mandataire: Cabinet Le Guen Maillet
(86) Numéro de dépôt international: PCT/EP2008/064211
(87) Numéro de publication internationale: WO 2009/053361

(56) Documents cités:
- WO-A-2005/114947
- US-A1- 2005 021 595
- Malcolm W Stevens: "An Implementation of an Optical Data Diode - DSTO-TR-0785", , 1 May 1999 (1999-05-01), XP055267742, Salisbury, South Australia Retrieved from the Internet: URL:http://citeseerx.ist.psu.edu/viewdoc/d ownload?doi=10.1.1.83.8650&rep=rep1&type=p df [retrieved on 2016-04-22]

## Description

La présente invention concerne une passerelle sécurisée permettant la communication bidirectionnelle entre deux réseaux de communication; un premier réseau de sécurité élevée et un second réseau dont la sécurité est plus faible.

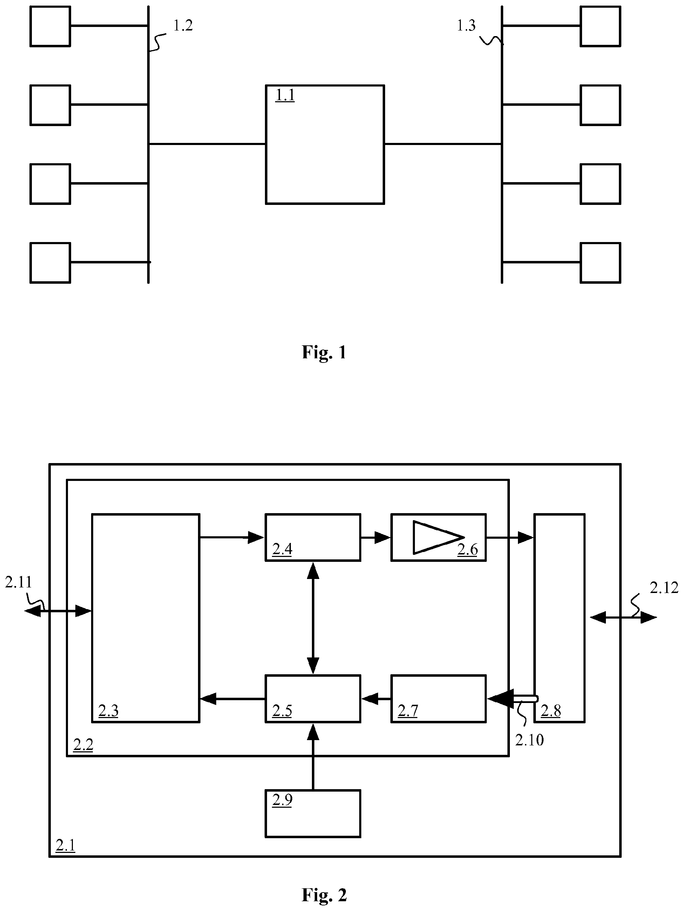

La Fig. 1 illustre l'architecture générale du système dans lequel l'invention se tient. La passerelle référencée 1.1 permet de connecter un premier réseau référencé 1.2 à un second réseau référencé 1.3. Dans le contexte de l'invention, les deux réseaux n'ont pas le même niveau de sécurité. Le terme réseau est employé ici pour désigner le réseau de communication proprement dit ainsi que l'ensemble d'appareils connectés pouvant communiquer entre eux. On entend par niveau de sécurité l'ensemble des règles et contraintes de fonctionnement imposées au réseau pour s'assurer que seuls les flux de données attendus peuvent transiter sur ce réseau ; que ces flux transitent entre les appareils attendus et qu'ils ne sont pas susceptibles d'être capturés par des appareils non autorisés. Lorsque des réseaux ayant des niveaux de sécurité différents communiquent entre eux, il est nécessaire de s'assurer que le réseau de sécurité haute ne peut pas être corrompu par des attaques en provenance du réseau de sécurité basse. Dans certains contextes nécessitant un haut niveau de sécurité, cette garantie doit être très forte, voire absolue. Un exemple d'un tel contexte concerne l'avionique où le réseau de données reliant les appareils de commande de l'appareil doit impérativement offrir un niveau de sécurité de très haut niveau surtout pendant le vol. Il est toutefois avantageux de connecter ce réseau de sécurité haute à un réseau de sécurité plus faible pour, entre autres, récupérer des données sur les différents paramètres du vol lors de l'entretien. Il est également avantageux de pouvoir fournir sur un réseau passager des informations en temps réel sur le vol pendant celui-ci.

Il est connu de construire des passerelles monodirectionnelles entre deux réseaux ayant des niveaux de sécurité différents. Dans ce cas, la passerelle autorise les transferts de données du réseau de sécurité haute vers le réseau de sécurité basse. Le côté monodirectionnel peut même être garanti au niveau physique de la communication, par exemple en utilisant la diode décrite dans la demande de brevet du même déposant publiée sous le numéro de publication FR 2 862 399. Ce type de passerelle permet de garantir l'impossibilité pour une attaque en provenance du réseau de sécurité basse de compromettre le réseau de sécurité haute.

Pour permettre le fonctionnement de certaines applications, il est toutefois nécessaire de transmettre des informations en provenance du réseau de sécurité basse vers le réseau de sécurité haute. Il peut s'agir parfois de simples commandes.

Il est également avantageux de pouvoir disposer de mécanismes de contrôle de flux lors des transferts de données depuis le réseau de sécurité haute vers le réseau de sécurité basse. Le contrôle de flux nécessite de pouvoir remonter des informations vers la source du transfert et donc depuis le réseau de sécurité basse vers le réseau de sécurité haute. Toutefois, il est souhaitable que le niveau de sécurité puisse être maintenu à un niveau très élevé. Il faut donc garantir un contrôle sur les informations remontant du réseau de sécurité basse vers le réseau de sécurité haute. Ce contrôle permet de garantir une sécurité de très haut niveau.

Il est classique de réaliser des passerelles à l'aide de pare-feu dans ce genre de situations. Ces pare-feu organisent un filtrage des données circulant sur la passerelle. Ces filtrages sont fait en fonction des protocoles de communication utilisés et des adresses et numéros de port impliqués dans la communication. Toutefois, le niveau de sécurité apporté par un tel pare-feu n'est pas suffisant dans certains contextes où le besoin de sécurité est particulièrement élevé. Il est avantageux de pouvoir élever le niveau de sécurité d'une telle passerelle pour pouvoir garantir un niveau de sécurité proche du niveau de sécurité apporté par une passerelle monodirectionnelle.

US 2005/021595 A1 (WESINGER RALPH E [US] ET AL) 27 janvier 2005 (2005-01-27) décrit un système de pare-feu séparant différents réseaux et décrit également un moyen de conversion de protocole pour adapter un lien à différentes caractéristiques. Il ne parvient pas à divulguer des chemins unidirectionnels distincts, ni aucun moyen de sécurité matérielle pour le flux de données.

WO 2005/114947 A (QINETIQ LTD [GB]; WISWMAN SIMON ROBERT [GB] QINETIQ LTD [GB]; WISEMAN) 1 décembre 2005 (2005-12-01) décrit un système de pare-feu utilisant des signatures cryptographiques supplémentaires pour vérifier l'authenticité des données. Malcolm W Stevens: "An Implementation of an Optical Data Diode - DSTO-TR-0785",, 1 mai 1999 (1999-05-01), Salisbury, South Australia Extrait de l'Internet:URL:http:// citeseerx.ist.psu.edu/viewdoc/download?doi=10.1.1.83.8650&rep=rep1&type=pdf décrit une implémentation matérielle pour un limiteur de flux de données unidirectionnel, c'est-à-dire une diode de données. Il explique également comment utiliser les paquets UDP pour le transfert de données vers un système haute sécurité afin d'éviter le recours à un canal de retour.

La présente invention propose une passerelle bidirectionnelle à niveau de sécurité renforcé entre un réseau de communication sécurité haute et un réseau de communication sécurité basse. Pour cela, la voie de retour depuis le réseau de sécurité basse vers le réseau de sécurité haute comprend un lien bas débit. La couche physique de ce lien bas débit diffère des couches physiques impliquées tant dans le réseau de sécurité haute que dans le réseau de sécurité basse. Ce lien bas débit est doté d'une couche de liaison selon un protocole qui diffère des protocoles utilisés sur les couches de liaison utilisées tant sur le réseau de sécurité haute que sur le réseau de sécurité basse. Avantageusement, la couche de liaison du lien bas débit est dotée d'un protocole d'authentification permettant de garantir l'origine des données.

La passerelle selon l'invention permet d'offrir un haut niveau de sécurité grâce à des mécanismes simples et faciles à certifier. Elle peut donc être utilisée dans des applications ayant des contraintes de sécurité fortes devant être garanties par le fournisseur de solution.

L'invention concerne un dispositif d'interconnexion selon la revendication 1 et un procédé de contrôle de flux selon la revendication 12.

Selon un mode particulier de réalisation de l'invention, le dispositif comporte en outre un moyen (2.10) de réduire le débit d'au moins une portion de la voie de retour par rapport au débit des interfaces du dispositif, formant ainsi un lien dit lien bas débit.

Selon un mode particulier de réalisation de l'invention, le lien bas débit (2.10) est un lien série.

Selon un mode particulier de réalisation de l'invention, le dispositif comporte un pare-feu (2.7) sur la voie de retour permettant le filtrage des données transitant sur la voie de retour.

Selon un mode particulier de réalisation de l'invention, le dispositif comporte en outre des moyens (2.8) de formater les données transmises sur la voie de retour, en amont du lien bas débit, selon un protocole de communication différent des protocoles de communication utilisés pour la communication sur les interfaces du dispositif et des moyens (2.5) de reconstituer les données transmises sur la voie de retour, en aval du lien bas débit, à partir des données formatées selon ledit protocole de communication différent des protocoles de communication utilisés pour la communication sur les interfaces du dispositif.

Selon un mode particulier de réalisation de l'invention, ledit protocole de communication différent des protocoles de communication utilisés pour la communication sur les interfaces du dispositif utilisant des paquets de données comportant un label (3.1) identifiant le type de données, le pare-feu comporte des moyens de filtrer les paquets en fonction d'une liste de labels autorisés.

Selon un mode particulier de réalisation de l'invention, une cadence maximale de transmission étant définie pour chaque label, le pare-feu (2.7) comporte des moyens de vérifier la cadence de transmission des paquets de chaque label et de rejeter les paquets d'un label donné en cas de dépassement de cette cadence.

Selon un mode particulier de réalisation de l'invention, plusieurs modes de fonctionnement étant définis pour le dispositif, la liste des labels autorisés dépend du mode de fonctionnement du dispositif.

Selon un mode particulier de réalisation de l'invention, toutes les données transmises sur la voie de retour étant signées cryptographiquement par un mécanisme à clés asymétriques, le dispositif comporte en outre des moyens de cryptographie (2.5) permettant de vérifier l'identité de la source des données.

Selon un mode particulier de réalisation de l'invention, toutes les données transmises sur la voie de retour étant chiffrées cryptographiquement par un mécanisme à clés asymétriques, le dispositif comporte en outre des moyens de cryptographie (2.5) permettant de déchiffrer les données transmises.

L'invention concerne également un procédé de contrôle de flux d'une transmission de données par paquets au sein d'un dispositif selon l'une des revendications 9 ou 10, comprenant pour chaque paquet de données une étape de transmission du paquet de données par le module de routage comprenant :
- une étape de préparation d'un paquet signé appelé paquet Ok ;
- une étape de préparation d'un paquet signé appelé paquet Ko ;
- une étape de transmission conjointe du paquet de données et des paquets Ok et Ko sur la voie descendante ;
et une étape de réception par le module d'adaptation comprenant :
- une étape de test de la bonne transmission du paquet de données ;
- si la transmission s'est bien passée, une étape de transmission du paquet Ok sur la voie de retour ;
- si la transmission s'est mal passée, une étape de transmission du paquet Ko sur la voie de retour.

Selon un mode particulier de réalisation de l'invention, le procédé comporte en outre une étape de transmission périodique d'un paquet signé appelé NOP sur la voie descendante par le module de routage en cas de non réception sur la voie de retour pendant un temps donné et une étape de transmission sur la voie de retour de tout paquet NOP reçu sur la voie descendante par le module d'adaptation.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre l'architecture générale du système dans lequel la présente invention prend place.
La Fig. 2 illustre l'architecture d'un exemple de réalisation de l'invention.
La Fig. 3 illustre la forme d'un paquet de données transitant sur le lien bas débit dans l'exemple de réalisation de l'invention.
La Fig. 4 illustre le fonctionnement du pare-feu de l'exemple de réalisation de l'invention.
La Fig. 5 illustre le fonctionnement du mécanisme d'accusé de réception dans l'exemple de réalisation de l'invention.

L'architecture de la passerelle, selon l'exemple de réalisation, est illustrée Fig. 2. La passerelle 2.1 contient une zone dite zone de confiance référencée 2.2. Cette zone de confiance offre le niveau de sécurité du réseau de sécurité haute connecté à l'interface de communication 2.11. Le réseau de sécurité basse est quant à lui connecté à l'interface de communication 2.12. Les interfaces de communication externes de la passerelle, 2.11 et 2.12, sont des interfaces standards comme, par exemple, des interfaces Ethernet selon la norme 802.3 de l'IEEE (*Institute of Electrical and Electronics Engineers* en anglais). Ces interfaces permettent la communication selon le protocole IP (*Internet Protocol* en anglais défini par la RFC 791). Cette passerelle comporte dans la zone de confiance un module de routage, référencé 2.3, chargé de gérer le lien avec le réseau de sécurité haute. Ce module de routage est connecté à deux voies monodirectionnelles: une voie qualifiée de voie descendante empruntée par le trafic de données en provenance du réseau de sécurité haute et à destination du réseau de sécurité basse, une voie qualifiée de voie de retour empruntée par le trafic de données en provenance du réseau de sécurité basse à destination du réseau de sécurité haute. Un module d'adaptation référencé 2.8 fait le lien entre le réseau de sécurité basse 2.12 et les deux voies monodirectionnelles. Tout le trafic de données entre le réseau de sécurité haute et le réseau de sécurité basse transite obligatoirement par ces deux voies monodirectionnelles. Il n'existe pas d'autre chemin pouvant être emprunté par les données pour traverser la passerelle.

La voie descendante comporte un module de gestion de voie référencé 2.4 et appelé *DMZ-out.* Les données transitant sur cette voie descendante passent préférentiellement au travers d'une diode référencée 2.6 qui permet de garantir au niveau physique l'impossibilité du moindre transfert de données remontant au travers de la voie descendante. Grâce à cette diode, la sécurité de la voie descendante est totale.

La voie de retour comporte un lien de communication particulier référencé 2.10 qualifié de lien bas débit. Ce lien bas débit 2.10 permet la communication entre le module d'adaptation 2.8 et un pare-feu référencé 2.7, chargé de filtrer les données transitant sur le lien bas débit 2.10. Ces données, une fois filtrées par le pare-feu 2.7 sont ensuite gérées par un second module de gestion de voie, référencé 2.5 et appelé *DMZ-in* avant d'être transmises au module de routage 2.3 pour une transmission au réseau de sécurité haute. Éventuellement, un lecteur de média 2.9 peut être connecté au module de gestion de voie *DMZ-in.*

Un aspect de la sécurité de la passerelle vient de la séparation physique de la communication descendante et de la communication remontante. Cette séparation de la communication en deux voies monodirectionnelles permet un contrôle spécifique des communications sur les deux voies. En effet, les données descendantes en provenance du réseau de sécurité haute ne nécessitent pas un contrôle poussé, car elles sont supposées sûres, tandis que les données remontantes sont les données suspectes nécessitant un contrôle poussé pour limiter le risque de corruption du réseau de sécurité haute.

Nous avons vu que la voie descendante est avantageusement sécurisée au niveau physique par une diode interdisant toute remontée d'information. Dans ce cas avantageux, le niveau de sécurité de la passerelle et donc du réseau de sécurité haute va dépendre du niveau de contrôle sur les informations empruntant la voie de retour. C'est donc l'ensemble des mécanismes de contrôle mis en oeuvre pour contrôler cette voie de retour qui va définir d'une part les services pouvant être mis en oeuvre au travers de la passerelle et leur niveau de sécurité. Les mécanismes de gestion du lien bas débit 2.10 et le pare-feu 2.7 sont avantageusement implémentés sur un même circuit logique programmable.

Un aspect du contrôle de la voie de retour tient à la nature du lien qualifié de bas débit 2.10 entre le module d'adaptation 2.8 et le pare-feu 2.7. Ce lien est qualifié de bas débit, car il est construit de façon à garantir un débit de transfert de données bas. En effet, un faible débit, typiquement de l'ordre de quelques kilooctets par seconde, rend improbable toute attaque dite par la force brute, impliquant un grand nombre d'essais et donc de requêtes traversant la passerelle. On utilise préférentiellement un lien série pour implémenter le lien bas débit 2.10, mais on pourrait également utiliser un ARINC 429, un bus CAN ou encore un lien discret. Ce lien série garantit de manière physique et donc incontournable un débit réduit sur la voie de retour comparativement au débit utilisé sur les réseaux tant de sécurité haute que de sécurité basse qui fonctionnent typiquement sur des liens physiques Ethernet d'un débit de l'ordre de la dizaine, voire la centaine, de Mégaoctets par seconde. On a donc une réduction du débit d'un facteur pouvant se situer entre 1000 et 10000 entre le débit maximum du lien bas débit et le débit des interfaces de la passerelle. Cet aspect du contrôle de la voie de retour tient donc à l'utilisation de moyens physiques de réduction du débit maximal de cette voie de retour.

Le niveau de sécurité de ce lien bas débit est avantageusement complété par un mécanisme de rupture de protocole de communication. Pour ce faire, un protocole particulier est mis en oeuvre sur le lien bas débit. Ce protocole est géré d'une part par le module d'adaptation 2.8 en amont du lien et par le module de gestion de voie *DMZ-in* 2.5 en aval. Le module d'adaptation 2.8 formate les données transmises selon ce protocole, tandis que le module de gestion de voie *DMZ-in* reconstitue les données transmises à partir des données formatées selon le protocole. Le pare-feu se contente de filtrer les données transmises selon ce protocole et permet donc de garantir que toute donnée transitant par la voie de retour est conforme à ce protocole. Il n'est donc pas possible de transmettre des données par la voie remontante selon un protocole classique comme IP (*Internet Protocol* en anglais défini par la RFC 791), UDP (*User Datagram Protocol* défini par la RFC 768) ou TCP (*Transmission Control Protocol* défini par la RFC 793). Du fait de cette rupture de protocole, une attaque est rendue plus difficile. En effet, le protocole utilisé sur le lien bas débit est un protocole non documenté et non accessible depuis l'extérieur de la passerelle puisque liant deux composants internes de celle-ci.

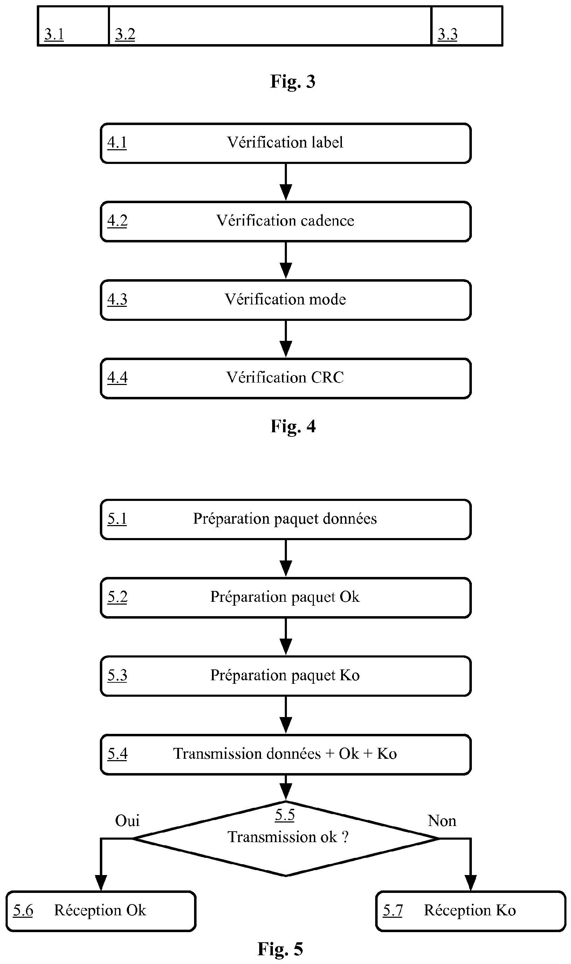

Dans l'exemple de réalisation de l'invention, ce protocole utilise une transmission par paquets dont la structure est illustrée Fig. 3.

Ces paquets comprennent un premier champ 3.1 contenant un label permettant de décrire le type des données transportées. Une valeur de label correspond à des commandes envoyées, un autre à des données, un autre éventuellement au mécanisme de contrôle de flux qui sera décrit plus bas. D'autres types peuvent être utilisés. Le paquet comprend également un champ 3.2 qui contient les données transportées. Le champ 3.3 du paquet comprend une somme de contrôle, par exemple un CRC (*Cyclic Redondancy Check* en anglais) permettant de s'assurer de l'intégrité des données transportées. Les paquets sont préparés par le module d'adaptation 2.8 qui effectue en particulier une conversion pour le lien physique, un renseignement du label, et le calcul du CRC. Les données transportées ont été préparées par la source qui les a alors signées à l'aide d'un mécanisme d'authentification. Ces données sont constituées d'un couple données utiles - descripteur. Le descripteur contient les informations qui seront nécessaires à la reconstitution des données en aval du lien. Ce sont des informations protocolaires permettant l'exécution de la commande lorsque les données correspondent à une commande ou des instructions de stockage lorsqu'il s'agit de données. Les données sont signées dès la source afin que l'entité vérificatrice puisse en vérifier l'origine et les exploiter en confiance. Les données transportées sur le lien bas débit correspondent donc aux données utiles et au descripteur associé, le tout étant signé et optionnellement chiffré.

Le pare-feu est destiné à s'assurer que seuls des paquets selon ce protocole de transfert transitent par le lien bas débit. Les principales actions effectuées par ce pare-feu sont décrites Fig. 4. Lors d'une étape 4.1, le pare-feu s'assure que le label du paquet est un label autorisé et connu. Par exemple, on vérifie que le label fait partie d'une liste de labels autorisés. Lors d'une étape éventuelle 4.2, on vérifie la cadence d'envoi des paquets correspondant à ce label. Dans cette éventualité, des cadences maximales de transmission sont définies pour chaque type de données et donc chaque label. Si la cadence de réception de paquets d'un label donné dépasse un seuil fixé, les paquets sont rejetés. Cette vérification permet de s'assurer contre d'éventuels envois massifs de paquets d'un label donné. C'est une protection supplémentaire contre une corruption du module d'adaptation directement connecté au réseau de sécurité basse. Lors d'une étape 4.3, le pare-feu vérifie le mode de fonctionnement. Cette étape est effectuée dans le cas où plusieurs modes de fonctionnement sont définis. Certains types de données et donc certains labels peuvent être interdits dans certains modes de fonctionnement. Typiquement, dans le cas d'une utilisation en avionique, un mode sol et un mode vol sont définis. Certains types de données ne seront autorisés que lorsque l'appareil est au sol et donc la passerelle en mode sol. Ces mêmes labels seront interdits en mode vol. La liste des labels autorisés peut donc dépendre du mode de fonctionnement de la passerelle. Enfin, lors d'une étape 4.4, le pare-feu vérifie l'intégrité du paquet par un contrôle de la somme de contrôle, typiquement un CRC.

Après passage par le pare-feu, les paquets sont transmis au module de gestion de voie *DMZ-in.* Ce module *DMZ-in* est chargé de l'interprétation des paquets, de leur reconstruction selon le label et de la vérification du mécanisme d'authentification. Comme indiqué plus haut, les données transportées sont signées au moyen d'un jeu de clés asymétriques. Elles contiennent une signature que le module DMZ-in peut vérifier à l'aide des clés publiques et certificats requis qu'elle contient. Pour augmenter le niveau de sécurité, il est exigé que toute donnée transmise par la voie remontante soit signée par un mécanisme d'authentification par clés asymétriques. On s'assure ainsi que seuls les acteurs prévus et dûment authentifiés peuvent envoyer des données vers le réseau de sécurité haute. Préférentiellement, les données sont également chiffrées à l'aide des mêmes certificats. Le module *DMZ-in* s'assure donc de la vérification des signatures et vérifie ainsi l'identité de la source des données. Lorsque les données émises ont dû être morcelées en plusieurs paquets pour la transmission sur le lien bas débit par le module d'adaptation, le module *DMZ-in* s'occupe de reconstituer les données morcelées. Une fois reconstituées et leur intégrité ainsi que la source vérifiées par traitement de la signature numérique, les données peuvent être délivrées à leur destinataire pour traitement. Dans le cas où les données sont chiffrées, le destinataire transmet les données au module *DMZ-out* pour le déchiffrement. En effet, dans le mode de réalisation décrit, le chiffrement et déchiffrement sont assurés par des moyens cryptographiques du module *DMZ-out,* par exemple du type d'une carte SIM (*Subscriber Identity Module* en anglais). Ces moyens renferment une clé privée permettant au module DMZ-out de chiffrer les données qu'elle reçoit avant de les transmettre vers la diode ou de déchiffrer les données fournies par les destinataires de flux montant chiffrés.

Cette passerelle permet d'implémenter des mécanismes simples nécessitant une interaction entre les deux réseaux. On peut ainsi envoyer des données vers le réseau de sécurité haute. On peut également envoyer des commandes permettant de déclencher l'envoi de données dans la direction inverse.

Il devient possible pour un client sur le réseau de sécurité basse de déclencher l'envoi des données et de choisir les données qu'il désire recevoir depuis le réseau de sécurité haute. Ces mécanismes sont implémentés de manière contrôlée par des acteurs dûment authentifiés au travers d'un nombre limité de mécanismes. Toutes les données remontantes empruntent un canal limité en débit et transitent en utilisant un protocole non standard. Tous les paquets de données selon ce protocole non standard sont filtrés par un pare-feu dédié mettant en oeuvre des règles de filtrages adaptées au protocole selon des contraintes relatives aux différents types de données. Ces contraintes pouvant comprendre la cadence de transmission, c'est-à-dire le débit des données pour un type particulier, ainsi que le mode de fonctionnement de la passerelle.

En particulier, il est possible d'implémenter un contrôle de flux pour les données transitant depuis le réseau de sécurité haute vers le réseau de sécurité basse. Ce mécanisme est illustré par la Fig. 5. Pour cela, le module de gestion de voie *DMZ-out* prépare pour chaque paquet de données envoyées deux paquets pouvant lui être renvoyés par le module d'adaptation. Ce sont les étapes 5.1, 5.2 et 5.3. Un premier paquet est qualifié de paquet *Ok* et signifiera que le paquet de données est bien reçu par le module d'adaptation. Un second paquet est qualifié de paquet *Ko* et signifiera que le paquet n'a pas été correctement reçu par le module d'adaptation. On a vu que tout paquet devait être dûment signé pour être accepté par la voie de retour de la passerelle. En conséquence, les paquets *Ok* et *Ko* seront signés par leur émetteur du côté du réseau de sécurité haute. Cet émetteur peut être le module *DMZ-out.* Lors de l'étape 5.4, le paquet de données est transmis conjointement avec les deux paquets *Ok* et *Ko.* Lors de la réception par le module d'adaptation du paquet de données, celui-ci renvoie, étapes 5.6 et 5.7, via la voie de retour le paquet *Ok* ou *Ko* en fonction d'un test 5.5 sur la transmission du paquet de données. Du fait que ces paquets sont dûment signés par le module *DMZ-out,* ils passent sans problème les vérifications faites sur la voie de retour sans pouvoir être corrompus. Sur réception d'un paquet *Ko,* la *DMZ-out* retransmet le paquet mal reçu. Sur réception d'un paquet *Ok,* la *DMZ-out* continue la transmission avec le paquet suivant. Ce mécanisme peut également s'appliquer à un contrôle de flux par fenêtre d'émission, où la taille de la fenêtre d'émission s'adapte en fonction du type de paquet *Ok* ou *Ko* reçu.

Lorsque aucune réponse n'est reçue pendant un certain temps, la *DMZ-out* génère un paquet qualifié de paquet *NOP.* Ce paquet correspond à un paquet *Ok* non associé à un paquet de données. Ce paquet est transmis via la voie descendante pour être remonté par le module d'adaptation. En cas de non-réception du paquet en retour, la ligne peut être considérée comme rompue. Le paquet *NOP* continue à être transmis régulièrement pour permettre de détecter un retour à la normale. Tant que ce paquet *NOP* n'est pas reçu en retour, aucun paquet de données n'est transmis. Ces paquets *Ok, Ko* et *NOP* sont interprétés et vérifiés par la *DMZ-in* avant d'être transmis en retour à la *DMZ-out.*

Avantageusement, un mécanisme anti rejeu est implémenté dans ces paquets *Ok, Ko* et *NOP.* Ce mécanisme peut être implémenté sous forme d'un numéro de séquence ou d'étiquette temporelle (*timestamp* en anglais) dans le paquet. Ce mécanisme anti rejeu permet d'éviter une éventuelle attaque par renvoi malveillant de ces paquets.

Le mécanisme de contrôle de flux n'est pas forcément appliqué à tous les transferts de données descendants. En particulier, les transferts de petites quantités de données peuvent se faire selon un mode dit *send and forget*, c'est-à-dire envoi et oubli. Dans ce mode, la *DMZ-out* envoie les paquets de données sans générer de paquets *Ok* ou *Ko.* Ces paquets ne sont pas mémorisés et leur bonne transmission n'est pas vérifiée.

## Revendications

1. Dispositif d'interconnexion (2.1) d'au moins deux réseaux de communication de données, connectant un premier réseau qualifié de réseau de sécurité haute et au moins un second réseau qualifié de réseau de sécurité basse, comportant :
- une première interface de communication (2.11) avec le réseau de sécurité haute ;
- une seconde interface de communication (2.12) avec le réseau de sécurité basse ;
- un module de routage (2.3) connecté à la première interface ;
- un module d'adaptation (2.8) connecté à la seconde interface ;
**caractérisé en ce qu'**il comporte en outre :
- une voie monodirectionnelle (2.4, 2.6), dite voie descendante, entre le module de routage (2.3) et le module d'adaptation (2.8), permettant le transfert de données depuis le module de routage (2.3) à destination du module d'adaptation (2.8), la voie monodirectionnelle comportant une diode interdisant toute remontée de données par la voie descendante; et
- une voie monodirectionnelle (2.5, 2.7, 2.8), dite voie de retour, entre le module d'adaptation (2.8) et le module de routage (2.3), permettant le transfert de données depuis le module d'adaptation (2.8) à destination du module de routage (2.3), la voie de retour comportant un module de gestion voie et un pare-feu placé entre le module de gestion de voie et le module d'adaptation et, le module d'adaptation (2.8) faisant le lien entre les voies monodirectionnelles et la seconde interface (2.12) et formate les données transmises sur la voie de retour selon un protocole différent de celui utilisé sur les réseaux de sécurité haute et basse, le module de gestion de voie reconstruisant les données transmises sur la voie de retour à partir du protocole utilisé par le module d'adaptation pour formater les données transmises, le pare-feu filtrant les données transmises selon le protocole de manière à garantir que toute donnée transitant par la voie de retour est conforme audit protocole.

2. Dispositif selon l'une des revendications 1, **caractérisé en ce qu'**il comporte en outre un moyen (2.10) de réduire le débit d'au moins une portion de la voie de retour par rapport au débit des interfaces du dispositif, formant ainsi un lien dit lien bas débit.

3. Dispositif selon la revendication 2, **caractérisé en ce que** le lien bas débit (2.10) est un lien série.

4. Dispositif selon l'une des revendications 1 à 3, **caractérisé en ce qu'**il comporte un pare-feu (2.7) sur la voie de retour permettant le filtrage des données transitant sur la voie de retour.

5. Dispositif selon l'une des revendications 2 à 4, **caractérisé en ce qu'**il comporte en outre :
- des moyens (2.8) de formater les données transmises sur la voie de retour, en amont du lien bas débit, selon un protocole de communication différent des protocoles de communication utilisés pour la communication sur les interfaces du dispositif ;
- des moyens (2.5) de reconstituer les données transmises sur la voie de retour, en aval du lien bas débit, à partir des données formatées selon ledit protocole de communication différent des protocoles de communication utilisés pour la communication sur les interfaces du dispositif.

6. Dispositif selon la revendication 5, **caractérisé en ce que**, ledit protocole de communication différent des protocoles de communication utilisés pour la communication sur les interfaces du dispositif utilisant des paquets de données comportant un label (3.1) identifiant le type de données, le pare-feu comporte des moyens de filtrer les paquets en fonction d'une liste de labels autorisés.

7. Dispositif selon la revendication 6, **caractérisé en ce que**, une cadence maximale de transmission étant définie pour chaque label, le pare-feu (2.7) comporte des moyens de vérifier la cadence de transmission des paquets de chaque label et de rejeter les paquets d'un label donné en cas de dépassement de cette cadence.

8. Dispositif selon la revendication 5, **caractérisé en ce que**, plusieurs modes de fonctionnement étant définis pour le dispositif, la liste des labels autorisés dépend du mode de fonctionnement du dispositif.

9. Dispositif selon l'une des revendications 1 à 8, **caractérisé en ce que**, toutes les données transmises sur la voie de retour étant signées cryptographiquement par un mécanisme à clés asymétriques, le dispositif comporte en outre des moyens de cryptographie (2.5) permettant de vérifier l'identité de la source des données.

10. Dispositif selon la revendication 9, **caractérisé en ce que**, toutes les données transmises sur la voie de retour étant chiffrées cryptographiquement par un mécanisme à clés asymétriques, le dispositif comporte en outre des moyens de cryptographie (2.5) permettant de déchiffrer les données transmises.

11. Procédé de contrôle de flux d'une transmission de données par paquets au sein d'un dispositif selon l'une des revendications 9 ou 10, **caractérisé en ce qu'**il comprend pour chaque paquet de données les étapes suivantes :
- une étape de transmission du paquet de données par le module de routage comprenant :
- une étape de préparation d'un paquet signé appelé paquet Ok ;
- une étape de préparation d'un paquet signé appelé paquet Ko ;
- une étape de transmission conjointe du paquet de données et des paquets Ok et Ko sur la voie descendante ;
- une étape de réception par le module d'adaptation comprenant :
- une étape de test de la bonne transmission du paquet de données ;
- si la transmission s'est bien passée, une étape de transmission du paquet Ok sur la voie de retour ;
- si la transmission s'est mal passée, une étape de transmission du paquet Ko sur la voie de retour.

12. Procédé de contrôle de flux selon la revendication 11, **caractérisé en ce qu'**il comporte en outre :
- une étape de transmission périodique d'un paquet signé appelé NOP sur la voie descendante par le module de routage en cas de non-réception sur la voie de retour pendant un temps donné ;
- une étape de transmission sur la voie de retour de tout paquet NOP reçu sur la voie descendante par le module d'adaptation.

## Patentansprüche

1. Vorrichtung zur Verbindung (2.1) mindestens zweier Datenkommunikationsnetzwerke, die ein erstes Netzwerk, das als Netzwerk hoher Sicherheit bezeichnet wird, und mindestens ein zweites Netzwerk, das als Netzwerk niedriger Sicherheit bezeichnet wird, verbindet, umfassend:
- eine erste Schnittstelle zur Kommunikation (2.11) mit dem Netzwerk hoher Sicherheit;
- eine zweite Schnittstelle zur Kommunikation (2.12) mit dem Netzwerk niedriger Sicherheit;
- ein Routing-Modul (2.3), das mit der ersten Schnittstelle verbunden ist;
- ein Anpassungsmodul (2.8), das mit der zweiten Schnittstelle verbunden ist;
**dadurch gekennzeichnet, dass** sie ferner Folgendes umfasst:
- eine monodirektionale Strecke (2.4, 2.6), die als Abwärtsstrecke bezeichnet wird, zwischen dem Routing-Modul (2.3) und dem Anpassungsmodul (2.8), welche die Übermittlung von Daten von dem Routing-Modul (2.3) zum Anpassungsmodul (2.8) gestattet, wobei die monodirektionale Strecke eine Diode umfasst, die jegliches Wiederaufsteigen von Daten über die Abwärtsstrecke untersagt; und
- eine monodirektionale Strecke (2.5, 2.7, 2.8), die als Rückstrecke bezeichnet wird, zwischen dem Anpassungsmodul (2.8) und dem Routing-Modul (2.3), welche die Übermittlung von Daten von dem Anpassungsmodul (2.8) zum Routing-Modul (2.3) gestattet, wobei die Rückstrecke ein Streckenverwaltungsmodul und eine Firewall, die zwischen dem Streckenverwaltungsmodul und dem Anpassungsmodul platziert ist, umfasst, und wobei das Anpassungsmodul (2.8) die Verbindung zwischen den monodirektionalen Strecken und der zweiten Schnittstelle (2.12) herstellt und die Daten, die auf der Rückstrecke übertragen werden, entsprechend einem Protokoll formatiert, das sich von jenem unterscheidet, das auf den Netzwerken hoher und niedriger Sicherheit genutzt wird, wobei das Streckenverwaltungsmodul die Daten, die auf der Rückstrecke übertragen werden, auf Grundlage des Protokolls wiederaufbaut, das von dem Anpassungsmodul genutzt wird, um die übertragenen Daten zu formatieren, wobei die Firewall die übertragenen Daten entsprechend dem Protokoll so filtert, dass garantiert wird, dass alle Daten, welche die Rückstrecke durchlaufen, dem Protokoll entsprechen.

2. Vorrichtung nach einem der Ansprüche 1, **dadurch gekennzeichnet, dass** sie ferner ein Mittel (2.10) zum Verringern des Durchsatzes mindestens eines Abschnitts der Rückstrecke bezogen auf den Durchsatz der Schnittstellen der Vorrichtung umfasst, wodurch eine Verbindung gebildet wird, die als Verbindung niedrigen Durchsatzes bezeichnet wird.

3. Vorrichtung nach Anspruch 2, **dadurch gekennzeichnet, dass** die Verbindung niedrigen Durchsatzes (2.10) eine serielle Verbindung ist.

4. Vorrichtung nach einem der Ansprüche 1 bis 3, **dadurch gekennzeichnet, dass** sie eine Firewall (2.7) auf der Rückstrecke umfasst, welche die Filterung der Daten gestattet, welche die Rückstrecke durchlaufen.

5. Vorrichtung nach einem der Ansprüche 2 bis 4, **dadurch gekennzeichnet, dass** sie ferner Folgendes umfasst:
- Mittel (2.8) zum Formatieren der Daten, die auf der Rückstrecke übertragen werden, stromauf der Verbindung niedrigen Durchsatzes, entsprechend einem Kommunikationsprotokoll, das sich von den Kommunikationsprotokollen unterscheidet, die zur Kommunikation auf den Schnittstellen der Vorrichtung genutzt werden;
- Mittel (2.5) zum Wiederherstellen der Daten, die auf der Rückstrecke übertragen werden, stromab der Verbindung niedrigen Durchsatzes, auf Grundlage der Daten, die entsprechend dem Kommunikationsprotokoll formatiert werden, das sich von den Kommunikationsprotokollen unterscheidet, die zur Kommunikation auf den Schnittstellen der Vorrichtung genutzt werden.

6. Vorrichtung nach Anspruch 5, **dadurch gekennzeichnet, dass**, wobei das Kommunikationsprotokoll, das sich von den Kommunikationsprotokollen unterscheidet, die für die Kommunikation auf den Schnittstellen der Vorrichtung genutzt werden, Datenpakete nutzt, die ein Kennzeichen (3.1) umfassen, das den Datentyp identifiziert, die Firewall Mittel zur Filterung der Pakete in Abhängigkeit von einer Liste autorisierter Kennzeichen umfasst.

7. Vorrichtung nach Anspruch 6, **dadurch gekennzeichnet, dass**, wobei eine maximale Übertragungsrate für jedes Kennzeichen definiert ist, die Firewall (2.7) Mittel zur Überprüfung der Übertragungsrate der Pakete jedes Kennzeichens und zur Ablehnung der Pakete eines bestimmten Kennzeichens im Falle einer Überschreitung dieser Rate umfasst.

8. Vorrichtung nach Anspruch 5, **dadurch gekennzeichnet, dass**, wobei mehrere Betriebsmodi für die Vorrichtung definiert sind, die Liste der autorisierten Kennzeichen vom Betriebsmodus der Vorrichtung abhängt.

9. Vorrichtung nach einem der Ansprüche 1 bis 8, **dadurch gekennzeichnet, dass**, wobei alle Daten, die auf der Rückstrecke übertragen werden, von einem Mechanismus mit asymmetrischen Schlüsseln kryptographisch signiert sind, die Vorrichtung ferner Kryptographiemittel (2.5) umfasst, die es gestatten, die Identität der Quelle der Daten zu überprüfen.

10. Vorrichtung nach Anspruch 9, **dadurch gekennzeichnet, dass**, wobei alle Daten, die auf der Rückstrecke übertragen werden, von einem Mechanismus mit asymmetrischen Schlüsseln kryptographisch chiffriert sind, die Vorrichtung ferner Kryptographiemittel (2.5) umfasst, die es gestatten, die übertragenen Daten zu dechiffrieren.

11. Verfahren zur Flusssteuerung einer Übertragung von Daten durch Pakete innerhalb einer Vorrichtung nach einem der Ansprüche 9 oder 10, **dadurch gekennzeichnet, dass** es für jedes Datenpaket die folgenden Schritte umfasst:
- einen Schritt des Übertragens des Datenpakets durch das Routing-Modul, umfassend:
- einen Schritt des Vorbereitens eines signierten Pakets, das als Ok-Paket bezeichnet wird;
- einen Schritt des Vorbereitens eines signierten Pakets, das als Ko-Paket bezeichnet wird;
- einen Schritt des gemeinsamen Übertragens des Datenpakets und der Ok- und Ko-Pakete auf der Abwärtsstrecke;
- einen Schritt des Empfangens durch das Anpassungsmodul, umfassend:
- einen Schritt des Testens der guten Übertragung des Datenpakets;
- wenn die Übertragung gut verlaufen ist, einen Schritt des Übertragens des Ok-Pakets auf der Rückstrecke;
- wenn die Übertragung schlecht verlaufen ist, einen Schritt des Übertragens des Ko-Pakets auf der Rückstrecke.

12. Verfahren zur Flusssteuerung nach Anspruch 11, **dadurch gekennzeichnet, dass** es ferner Folgendes umfasst:
- einen Schritt des periodischen Übertragens eines signierten Pakets, das als NOP-Paket bezeichnet wird, auf der Abwärtsstrecke durch das Routing-Modul, im Falle des Nichtempfangs auf der Rückstrecke während einer bestimmten Zeit;
- einen Schritt des Übertragens, auf der Rückstrecke, jedes NOP-Pakets, das auf der Abwärtsstrecke von dem Anpassungsmodul empfangen wird.

## Claims

1. Device for interconnection (2.1) of at least two data communication networks, connecting a first network referred to as the high security network and at least one second network referred to as the low security network, comprising:
- a first interface for communication (2.11) with the high security network;
- a second interface for communication (2.12) with the low security network;
- a routing module (2.3) connected to the first interface;
- an adaptation module (2.8) connected to the second interface;
**characterized in that** it furthermore comprises:
- a monodirectional path (2.4, 2.6), termed the downpath, between the routing module (2.3) and the adaptation module (2.8), allowing the transfer of data from the routing module (2.3) destined for the adaptation module (2.8), the monodirectional path comprising a diode prohibiting any uploading of data through the downpath; and
- a monodirectional path (2.5, 2.7, 2.8), termed the return path, between the adaptation module (2.8) and the routing module (2.3), allowing the transfer of data from the adaptation module (2.8) destined for the routing module (2.3), the return path comprising a path management module and a firewall placed between the path management module and the adaptation module, and the adaptation module (2.8) forming the link between the monodirectional paths and the second interface (2.12) and formats the data transmitted on the return path according to a protocol different from that used on the high and low security networks, the path management module reconstructing the data transmitted on the return path on the basis of the protocol used by the adaptation module to format the data transmitted, the firewall filtering the data transmitted according to the protocol in such a way as to guarantee that any datum travelling through the return path is compliant with the said protocol.

2. Device according to one of Claims 1, **characterized in that** it furthermore comprises a means (2.10) to reduce the bitrate of at least one portion of the return path with respect to the bitrate of the interfaces of the device, thus forming a link termed the low-bitrate link.

3. Device according to Claim 2, **characterized in that** the low-bitrate link (2.10) is a serial link.

4. Device according to one of Claims 1 to 3, **characterized in that** it comprises a firewall (2.7) on the return path allowing the filtering of the data travelling on the return path.

5. Device according to one of Claims 2 to 4, **characterized in that** it furthermore comprises:
- means (2.8) to format the data transmitted on the return path, upstream of the low-bitrate link, according to a communication protocol different from the communication protocols used for the communication on the interfaces of the device;
- means (2.5) to reconstruct the data transmitted on the return path, downstream of the low-bitrate link, on the basis of the data formatted according to the said communication protocol different from the communication protocols used for the communication on the interfaces of the device.

6. Device according to Claim 5, **characterized in that**, the said communication protocol different from the communication protocols used for the communication on the interfaces of the device using data packets comprising a label (3.1) identifying the type of data, the firewall comprises means to filter the packets as a function of a list of authorized labels.

7. Device according to Claim 6, **characterized in that**, a maximum transmission rate being defined for each label, the firewall (2.7) comprises means to verify the rate of transmission of the packets of each label and to reject the packets of a given label in case of exceeding of this rate.

8. Device according to Claim 5, **characterized in that**, several modes of operation being defined for the device, the list of authorized labels depends on the mode of operation of the device.

9. Device according to one of Claims 1 to 8, **characterized in that**, all the data transmitted on the return path being signed cryptographically by an asymmetric-keys mechanism, the device furthermore comprises cryptography means (2.5) making it possible to verify the identity of the source of the data.

10. Device according to Claim 9, **characterized in that**, all the data transmitted on the return path being enciphered cryptographically by an asymmetric-keys mechanism, the device furthermore comprises cryptography means (2.5) making it possible to decipher the data transmitted.

11. Method of flow control of a transmission of data by packets within a device according to one of Claims 9 or 10, **characterized in that** it comprises for each data packet the following steps:
- a step of transmitting the data packet by the routing module comprising:
- a step of preparing a signed packet called Ok packet;
- a step of preparing a signed packet called Ko packet;
- a step of jointly transmitting the data packet and the Ok and Ko packets on the downpath;
- a step of receiving by the adaptation module comprising:
- a step of testing the proper transmission of the data packet;
- if the transmission went well, a step of transmitting the Ok packet on the return path;
- if the transmission went badly, a step of transmitting the Ko packet on the return path.

12. Method of flow control according to Claim 11, **characterized in that** it furthermore comprises:
- a step of periodically transmitting a signed packet called NOP on the downpath by the routing module in case of non-reception on the return path during a given time;
- a step of transmitting on the return path any NOP packet received on the downpath by the adaptation module.
